# EUROPÄISCHE PATENTSCHRIFT

(11) **EP 1 113 950 B1**
(45) Veröffentlichungstag und Bekanntmachung des Hinweises auf die Patenterteilung: **04.06.2003**
(21) Anmeldenummer: 99969069.6
(22) Anmeldetag: 14.09.1999
(51) Int. Cl.: B60R 21/20

(54) **LENKRAD MIT AIRBAGMODUL**
STEERING WHEEL WITH AN AIRBAG MODULE
VOLANT EQUIPE D'UN MODULE SAC GONFLABLE

(30) Priorität: 16.09.1998 DE 29816925 U
(43) Veröffentlichungstag der Anmeldung: 11.07.2001
(73) Patentinhaber: Takata-Petri AG, 63743 Aschaffenburg (DE)
(72) Erfinder: LAUE, Andreas, D-63820 Elsenfeld (DE)
(74) Vertreter: Baumgärtel, Gunnar, Dr.
(86) Internationale Anmeldenummer: DE9902964
(87) Internationale Veröffentlichungsnummer: WO00015469

(56) Entgegenhaltungen:
- EP-A- 0 788 935
- EP-A- 0 857 625
- DE-A- 19 653 684
- US-A- 5 410 114

## Beschreibung

Die Erfindung betrifft ein Lenkrad mit Airbagmodul nach dem Oberbegriff des Anspruchs 1. Ein derartiges lenkrad ist aus der Schrifft DE-A-196 53 684 bekant.

Bei Kraftfahrzeuglenkrädern besteht aufgrund der starren Kopplung zur Lenksäule das Problem, daß zumindest in bestimmten Geschwindigkeitsbereichen am Lenkrad Vibrationen auftreten. Diese werden durch die Eigenfrequenz des Airbag-Lenkrades in Abhängigkeit zu einer bestimmten MotorDrehzahl verursacht. Neben der Verschiebung der Eigenfrequenz des Airbag-Lenkrades durch Anbringen einer Zusatzmasse am Lenkrad in einen Frequenzbereich, der außerhalb des Bereichs der tatsächlich auftretenden Schwingungen am Lenkrad liegt, ist zur Verringerung dieser Vibrationen z. B. aus der DE 37 10 173 A1 bekannt, das Gehäuse der Airbageinheit auf dem Lenkrad in der Weise gedämpft schwingend zu lagern, daß es gegenüber dem Lenkrad quer zur Längsachse der Lenksäule relativ bewegbar ist. Zusätzlich ist vorgesehen, daß das Gehäuse auch in Richtung der Längsachse der Lenksäule bewegbar ist. Erreicht wird die Bewegbarkeit dadurch, daß an den Seiten des Gehäuses Haltebügel angeordnet sind, die in entsprechenden Bohrungen Lagerbuchsen aufweisen, die geräuschdämpfende Eigenschaften haben. Durch die Lagerbuchsen sind Halteschrauben für die Befestigung der Haltebügel an den Speichen des Lenkrades geführt. Dabei ist zwischen dem Schaft jeder Halteschraube und der jeweiligen Buchse ein Freiraum vorhanden, der eine seitliche Verschiebung der Haltebügel gegenüber den Halteschrauben ermöglicht. Somit wird eine schwimmende Lagerung erzielt.

Dabei ist das gesamte Airbagmodul einschließlich der Kappe, die es gegenüber dem Fahrgastraum abschirmt, schwimmend gelagert.

Aus der US-A-5,410,114 ist ein Kraftfahrzeuglenkrad bekannt, das einen Hornkontakt und eine Einrichtung zur Verhinderung von Vibrationen umfasst.

Der Nachteil dieser Anordnung besteht jedoch darin, daß sie relativ aufwendig ist.

Eine einfachere Anordnung ist aus der DE 196 53 684 bekannt, die eine Mehrzahl elastisch verformbarer Haltebuchsen zeigt, durch die jeweils eine Schraube zur Befestigung des Airbagmoduls am Lenkrad geführt ist.

Diese Anordnung weist jedoch den Nachteil auf, daß bezüglich der Haltebuchse radiale Schwingungen nur begrenzt aufgenommen werden können.

Der Erfindung liegt deshalb die Aufgabe zugrunde, eine gedämpft schwingende Lagerung des Airbagmoduls im Lenkrad zu erzielen, die ein breites Frequenzspektrum von sowohl radialen als auch axialen Schwingungen aufnehmen kann.

Erfindungsgemäß wird das gemäß den Merkmalen des Anspruchs 1 erreicht.

Bei einem Lenkrad mit Airbagmodul, das am Lenkrad gedämpft schwingend gelagert ist, ist das Airbagmodul mit dem Lenkrad über mindestens ein elastisches Element verbunden, das einen frei stehenden Bereich für die Befestigung eines Halteelementes des Airbagmoduls aufweist, und das elastische Element einen buchsenförmigen ersten Abschnitt für die Befestigung am Lenkrad und einen buchsenförmigen zweiten Abschnitt mit dem freistehenden Bereich für die Befestigung des Airbagmoduls aufweist, wobei der zweite Abschnitt den ersten Abschnitt mit Abstand umgibt und an einer Seite mit dem ersten Abschnitt verbunden ist.

Ein solches elastisches Element ist einfach herstellbar, montierbar und mit dem Airbagmodul verbindbar. So kann das elastische Element direkt mit dem Lenkrad verbunden werden. In einer bevorzugten Ausführungsform ist aber der erste Abschnitt auf einer starren Buchse befestigt, die ihrerseits mittels einer Schraube und Mutter mit dem Lenkrad verbunden werden kann.

Es ist zweckmäßig, daß das elastische Element am frei liegenden Ende des zweiten Abschnitts mit dem Airbagmodul verbunden ist, da in diesem Fall die größte Dämpfung erreicht wird. Weiterhin ist es zweckmäßig, daß das elastische Element aus einem Elastomer besteht.

Das elastische Element ist an ein Trägerblech für einen Gasgenerator vorzugsweise anvulkanisiert.

Die Innen- und Außenkontur der buchsförmigen ersten und zweiten Abschnitte weisen vorzugsweise einen kreisförmigen Querschnitt auf.

In einer weiteren Ausgestaltung ist vorgesehen, daß der erste Abschnitt eine ungleichmäßige Wandstärke aufweist, indem z.B. dessen Innen- und Außenkontur exzentrisch zueinander liegen. Auf diese Weise wird ein richtungsabhängiges Schwingungsverhalten erreicht.

In einer weiteren Ausführungsform ist vorgesehen, den ersten buchsenförmigen Abschnitt konisch auszubilden, indem z.B. der Querschitt von der Verbindungsstelle mit dem zweiten Abschnitt ausgehend abnimmt.

Weiterhin kann auch der zweite buchsenförmige Abschnitt konisch verlaufen, indem z.B. der Querschnitt von der Verbindungsstelle mit dem ersten Abschnitt ausgehend zunimmt.

In einer bevorzugten Ausführungsform sind vier elastische Halteelemente an einem Trägerblech für den Gasgenerator vorgesehen.

In einer weiteren Ausgestaltung ist vorgesehen, daß das Airbagmodul und eine Kappe für dessen Abdeckung getrennt voneinander am Lenkrad befestigt sind, wobei die Kappe fest mit dem Lenkrad verbunden ist.

Die Erfindung soll in Ausführungsbeispielen anhand von Zeichnungen erläutert werden. Es zeigen:
- Fig. 1: einen Schnitt durch ein Lenkrad mit einem Airbag-modul, das auf einem elastischen Element angeordnet ist;
- Fig. 2: eine vergrößerte Darstellung des in der Fig. 1 dargestellten elastischen Elements;
- Fig. 3: eine Draufsicht auf ein Trägerblech für einen Gasgenerator mit vier elastischen Elementen;
- Fig. 4: einen Schnitt durch die Fig. 3 entlang der Linie A - A.

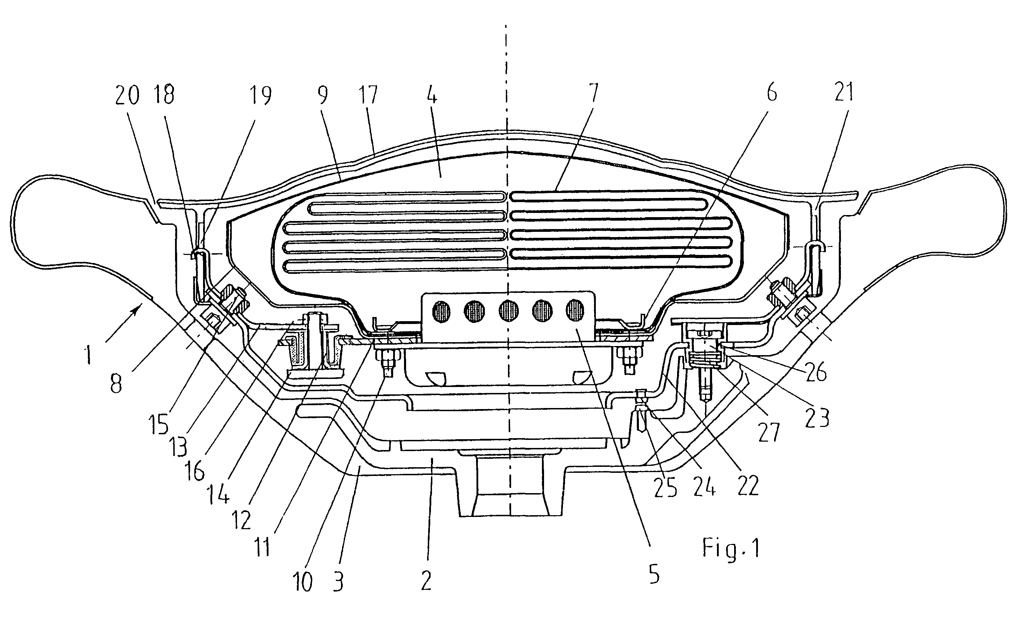

Ein Lenkrad 1 weist ein Lenkradskelett 2 auf, das mittels PUR-Schaum 3 verkleidet ist. Innerhalb des Lenkrades 1 ist ein Airbagmodul 4 angeordnet. Dieses weist einen Gasgenerator 5, ein Gassackhalteblech 6, einen Gassack 7 sowie ein Faltraumbegrenzungsblech 8 mit einer Abdeckung 9 auf. Diese Bauelemente des Airbagmoduls sind mittels Schrauben 10 an einem Trägerblech 11 befestigt, das in drei elastischen Elementen 12, von denen in der Fig. 1 nur ein Element erkennbar ist und die als Entkopplungselemente wirken, gelagert ist. Diese sind über Verbindungsbleche 13 mittels Schrauben 15 mit einer Kontaktbrücke 22 verbunden, die ihrerseits mittels Schrauben 23 mit dem Lenkradskelett 2 verbunden sind. Die elastischen Elemente 12 sind an den Verbindungsblechen 13 mittels Schrauben 14 und Muttern 16 befestigt.

Vibrationen des Lenkrades 1 werden wegen der elastischen Elemente 12 nicht oder nur in geringem Maße auf das Airbagmodul 4 übertragen.

Eine Kappe 17, die das Airbagmodul 4 gegenüber dem Fahrgastraum abdeckt, ist über die Verbindungsbleche 13 mit dem Lenkradskelett 2 verbunden. Die Verbindung zwischen der Kappe 17 und den Verbindungsblechen 13 erfolgt in der Weise, daß diese an ihrem oberen Ende 18 hakenförmig umgebogen sind und mit diesem Ende in Durchbrüchen 19 einer Seitenwand 21 der Kappe 17 verrastet sind. Die Kappe steht somit ohne Schwingungselemente mit dem Lenkradskelett 2 in Verbindung und schwingt beim Auftreten von Vibrationen etwa in der gleichen Weise wie das Lenkrad. Dadurch ist zwischen der Kappe 17 und der Oberfläche des Lenkrades kaum eine Relativbewegung vorhanden, so daß ein Schlitz 20 zwischen der Kappe 17 und dem Lenkrad 1 klein sein kann, wodurch das Aussehen des Lenkrades verbessert wird.

Diese erfindungsgemäße Lagerung kann sowohl bei einem fest mit dem Lenkrad verbundenen Airbagmodul als auch bei einem Airbagmodul angewendet werden, das zur Betätigung der Hupe (floating horn) gegenüber dem Lenkradskelett verschiebbar angeordnet ist, wie es in der Figur 1 dargestellt ist. Dort ist die Kontaktbrücke 22 mit einem elektrischen Kontakt 24 in Richtung des Lenkradskeletts 2 mit einem elektrischen Gegenkontakt 25 verschiebbar. Die Verschiebung der Kontaktbrücke 22 wird dadurch ermöglicht, daß sie im Bereich der Schrauben 23 Buchsen 26 aufweist, die auf den Schrauben 23 entgegen dem Druck einer Feder 27 verschiebbar sind. Bei Druck auf die Kappe 17 wird deshalb die Kontaktbrücke 22 zusammen mit dem Airbagmodul 4 verschoben, bis sich der Kontakt 24 und der Gegenkontakt 25 berühren und dadurch die Hupe betätigt wird.

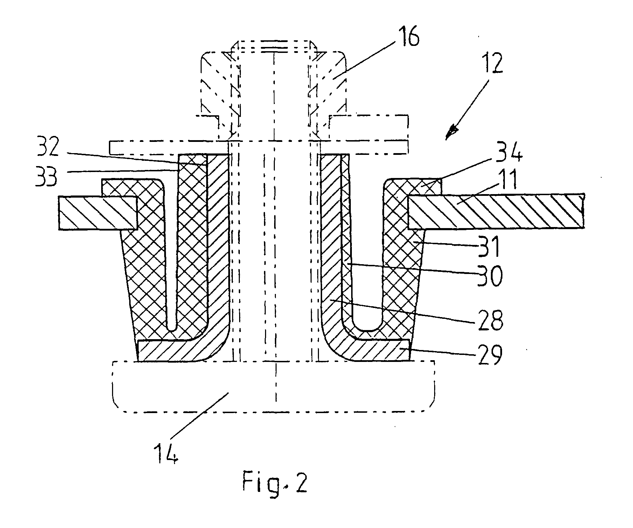

In der Fig. 2 ist das in der Fig. 1 verwendete elastische Element 12 vergrößert dargestellt. Dieses Element weist eine starre Buchse 28 auf, die unten einen flanschartigen Rand 29 hat. Rund um diese Buchse erstreckt sich ein erster buchsenförmiger Abschnitt 30 aus elastischem Material, der mit Abstand von einem zweiten buchsenförmigen Abschnitt 31 aus elastischem Material umgeben ist. Beide Abschnitte sind im Bereich des Randes 29 miteinander verbunden, wobei sie in diesem Ausführungsbeispiel ein einziges Teil darstellen. Die Buchse 28 und auch die Abschnitte 30, 31 weisen einen kreisförmigen Querschnitt auf.

Der erste buchsenförmige Abschnitt 30 verläuft von der Verbindungstelle mit dem zweiten Abschnitt 31 ausgehend konisch, wobei sich der Querschnitt nach oben verringert. Weiterhin liegen die Innenkontur 32 und die Außenkontur 33 des ersten Abschnitts 30 exzentrisch zueinander, so daß dieser eine ungleichmäßige Wandstärke aufweist.

Der zweite buchsenförmige Abschnitt 31 verläuft von der Verbindungstelle mit dem ersten Abschnitt ausgehend ebenfalls konisch, wobei sich der Querschnitt nach oben vergrößert. Das obere Ende 34 dieses Abschnitts ist als frei stehender Bereich mit dem Trägerblech 11 verbunden.

Dieser frei stehende Bereich ist in besonderem Maße dafür geeignet sowohl radiale als auch axiale Schwingungen zu dämpfen und damit auch das Schwingen des Trägerblechs 11 entsprechend zu dämpfen. Weiterhin ist dieses elastische Element 12 einfach und kostengünstig herstellbar und montierbar und erfordert einen geringen Platzbedarf.

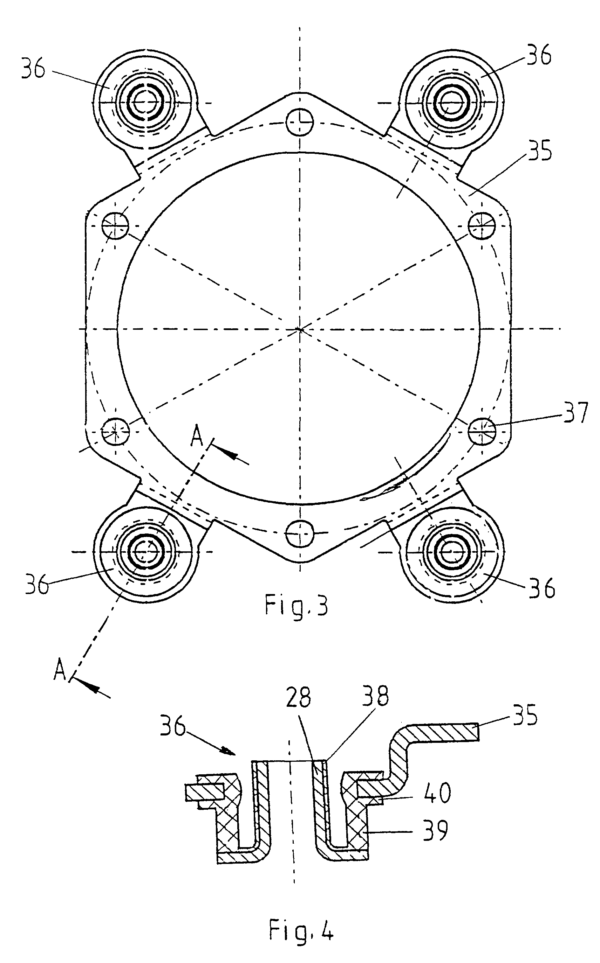

In der Fig. 3 ist ein Trägerblech 35 dargestellt, bei dem vier elastische Elemente 36 vorgesehen sind. Dieses Trägerblech 35 ist im Bereich der elastischen Elemente gekröpft, was insbesondere aus der Fig. 4 erkennbar ist. Das Trägerblech 35 weist Bohrungen 37 für die Aufnahme eines nicht dargestellten Gasgenerators auf. Die elastischen Elemente 36 weisen einen buchsenförmigen ersten Abschnitt 38 und einen buchsenförmigen zweiten Abschnitt 39 auf, die zylindrisch sind und koaxial zueinander liegen. Der erste Abschnitt ist wie im vorhergehenden Ausführungsbeispiel auf einer starren Buchse 28 befestigt. Der zweite Abschnitt ist oben mit einem verbreiterten Rand 40 zur Aufnahme des Trägerbleches 35 versehen.

## Patentansprüche

1. Lenkrad mit Airbagmodul, das am Lenkrad gedämpft schwingend gelagert ist, wobei das Airbagmodul (4) mit dem Lenkrad (1) über mindestens ein elastisches Element (12) verbunden ist, das einen frei stehenden Bereich (34, 40) für die Befestigung eines Halteelementes (11, 35) des Airbagmoduls (4) aufweist,
**dadurch gekennzeichnet,**
**daß** das elastische Element (12) einen buchsenförmigen ersten Abschnitt (30, 38) für die Befestigung am Lenkrad (1) und einen buchsenförmigen zweiten Abschnitt (31, 39) mit dem frei stehenden Bereich (34, 40) für die Befestigung des Airbagmoduls (4) aufweist, wobei der zweite Abschnitt (31, 39) den ersten Abschnitt (30, 38) mit Abstand umgibt und an einer Seite mit dem ersten Abschnitt (30, 38) verbunden ist.

2. Lenkrad nach Anspruch 1, **dadurch gekennzeichnet, daß** der erste Abschnitt (30, 38) auf einer starren Buchse (28) befestigt ist.

3. Lenkrad nach Anspruch 1 oder 2, **dadurch gekennzeichnet, daß** das elastische Element (12) am frei liegenden Ende (34, 40) des zweiten Abschnitts (31, 39) mit dem Airbagmodul (4) verbunden ist.

4. Lenkrad nach mindestens einem der vorhergehenden Ansprüche, **dadurch gekennzeichnet, daß** das elastische Element (12) aus einem Elastomer besteht.

5. Lenkrad nach mindestens einem der vorhergehenden Ansprüche, **dadurch gekennzeichnet, daß** das elastische Element (12) an ein Trägerblech (11, 35) für einen Gasgenerator (5) anvulkanisiert ist.

6. Lenkrad nach mindestens einem der vorhergehenden Ansprüche, **dadurch gekennzeichnet, daß** die Innen-(32) und Außenkontur (33) der buchsförmigen ersten (30, 38) und zweiten Abschnitte (31, 39) einen kreisförmiges Querschnitt aufweisen.

7. Lenkrad nach mindestens einem der vorhergehenden Ansprüche, **dadurch gekennzeichnet, daß** der erste Abschnitt (30) eine ungleichmäßige Wandstärke aufweist.

8. Lenkrad nach Anspruch 6 oder 7, **dadurch gekennzeichnet, daß** die Innen- (32) und Außenkontur (33) des ersten Abschnitts (30) exzentrisch zueinander liegen.

9. Lenkrad nach mindestens einem der vorhergehenden Ansprüche, **dadurch gekennzeichnet, daß** der erste buchsenförmig Abschnitt (30) konisch verläuft.

10. Lenkrad nach Anspruch 9, **dadurch gekennzeichnet, daß** der Querschnitt von der Verbindungsstelle mit dem zweiten Abschnitt (31) ausgehend abnimmt.

11. Lenkrad nach mindestens einem der vorhergehenden Ansprüche, **dadurch gekennzeichnet, daß** der zweite buchsenförmige Abschnitt (31) konisch verläuft.

12. Lenkrad nach Anspruch 11, **dadurch gekennzeichnet**,daß der Querschnitt von der Verbindungsstelle mit dem ersten Abschnitt (30) ausgehend zunimmt.

13. Lenkrad nach mindestens einem der vorhergehenden Ansprüche, **dadurch gekennzeichnet, daß** vier elastische Halteelemente (36) an einem Trägerblech (35) für den Gasgenerator (5) vorgesehen sind.

14. Lenkrad nach mindestens einem der vorhergehenden Ansprüche, **dadurch gekennzeichnet, daß** das Airbagmodul und eine Kappe für dessen Abdeckung getrennt voneinander am Lenkrad befestigt sind, wobei die Kappe fest mit dem Lenkrad verbunden ist.

## Claims

1. Steering wheel with an airbag module, which is supported on the steering wheel on a vibration-damped mounting, the airbag module (4) being connected to the steering wheel (1) by at least one elastic element (12), which has an isolated area (34, 40) for fixing a retaining element (11, 35) of the airbag module (4),
**characterized in that**
the elastic element (12) has a bush-shaped first section (30, 38) for fixing to the steering wheel (1) and a bush-shaped second section (31, 39) with the isolated area (34, 40) for fixing the airbag module (4), the second section (31, 39) surrounding the first section (30, 38) with clearance and being connected to the first section (30, 38) at one side.

2. Steering wheel as claimed in claim 1, **characterized in that** the first section (30, 38) is fixed on a rigid bush (28).

3. Steering wheel as claimed in claim 1 or 2, **characterized in that** the elastic element (12) is connected to the airbag module (4) at the isolated end (34, 40) of the second section (31, 39).

4. Steering wheel as claimed in at least one of the preceding claims, **characterized in that** the elastic element (12) is composed of an elastomer.

5. Steering wheel as claimed in at least one of the preceding claims, **characterized in that** the elastic element (12) is molded on to a carrier plate (11, 35) for a gas generator (5).

6. Steering wheel as claimed in at least one of the preceding claims, **characterized in that** the internal contour (32) and external contour (33) of the bush-shaped first section (30, 38) and second section (31, 39) have a circular cross section.

7. Steering wheel as claimed in at least one of the preceding claims, **characterized in that** the first section (30) has an irregular wall thickness.

8. Steering wheel as claimed in claim 6 or 7, **characterized in that** the internal contour (32) and external contour (33) of the first section (30) lie eccentrically to one another.

9. Steering wheel as claimed in at least one of the preceding claims, **characterized in that** the first bush-shaped section (30) tapers.

10. Steering wheel as claimed in claim 9, **characterized in that** the cross section diminishes from the point of connection to the second section (31) onwards.

11. Steering wheel as claimed in at least one of the preceding claims, **characterized in that** the second bush-shaped section (31) tapers.

12. Steering wheel as claimed in claim 11, **characterized in that** the cross section increases from the point of connection to the first section (30) onwards.

13. Steering wheel as claimed in at least one of the preceding claims, **characterized in that** four elastic retaining elements (36) are provided on a carrier plate (35) for the gas generator (5).

14. Steering wheel as claimed in at least one of the preceding claims, **characterized in that** the airbag module and a cap for covering it are fixed to the steering wheel separately from one another, the cap being firmly connected to the steering wheel.

## Revendications

1. Volant avec un module de sac gonflable qui est placé en oscillation amortie sur le volant, le module de sac gonflable (4) étant relié au volant (1) par au moins un élément élastique (12) qui présente une zone (34, 40) restant libre pour fixer un élément de maintien (11, 35) du module de sac gonflable (4),
**caractérisé en ce que** l'élément élastique (12) présente un premier segment (30, 38) en forme de douille pour la fixation au volant (1) et un deuxième segment (31, 39) en forme de douille avec la zone (34, 40) restant libre pour fixer le module de sac gonflable (4), le deuxième segment (31, 39) entourant à distance le premier segment (30, 38) et étant relié sur un côté au premier segment (30, 38).

2. Volant selon la revendication 1 **caractérisé en ce que** le premier segment (30, 38) est fixé sur une douille (28) rigide.

3. Volant selon la revendication 1 ou 2 **caractérisé en ce que** l'élément élastique (12) est relié au module de sac gonflable (4) à l'extrémité (34, 40) restant libre du deuxième segment (31, 39).

4. Volant selon au moins l'une des revendications précédentes **caractérisé en ce que** l'élément élastique (12) se compose d'un élastomère.

5. Volant selon au moins l'une des revendications précédentes **caractérisé en ce que** l'élément élastique (12) est appliqué par vulcanisation à une tôle de support (11, 35) pour un générateur à gaz (5).

6. Volant selon au moins l'une des revendications précédentes **caractérisé en ce que** le contour intérieur (32) et le contour extérieur (33) des premier (30, 38) et deuxième (31, 39) segments en forme de douille présentent une section transversale circulaire.

7. Volant selon au moins l'une des revendications précédentes **caractérisé en ce que** le premier segment (30) présente une épaisseur de paroi irrégulière.

8. Volant selon la revendication 6 ou 7 **caractérisé en ce que** les contours intérieur (32) et extérieur (33) du premier segment (30) sont placés de façon décentrée l'un par rapport à l'autre.

9. Volant selon au moins l'une des revendications précédentes **caractérisé en ce que** le premier segment (30) en forme de douille s'étend en cône.

10. Volant selon la revendication 9 **caractérisé en ce que** la section transversale diminue à partir du point de liaison avec le deuxième segment (31).

11. Volant selon au moins l'une des revendications précédentes **caractérisé en ce que** le deuxième segment (31) en forme de douille s'étend en cône.

12. Volant selon la revendication 11 **caractérisé en ce que** la section transversale augmente à partir du point de liaison avec le premier segment (30).

13. Volant selon au moins l'une des revendications précédentes **caractérisé en ce que** quatre éléments de maintien élastiques (36) sont prévus sur une tôle de support (35) pour le générateur à gaz (5).

14. Volant selon au moins l'une des revendications précédentes **caractérisé en ce que** le module de sac gonflable et un capuchon pour le recouvrir sont fixés séparément l'un de l'autre, le capuchon étant relié de façon rigide au volant.
